Europäisches Patentamt

European Patent Office

Office européen des brevets

(19)

(11) Publication number: **0 505 105 A2**

# EUROPEAN PATENT APPLICATION

(12)

(21) Application number: **92302164.6**

(22) Date of filing: **13.03.92**

(51) Int. Cl.5: **H04Q 7/04**, H04B 7/26

(30) Priority: **22.03.91 GB 9106149**

(43) Date of publication of application:
**23.09.92 Bulletin 92/39**

(84) Designated Contracting States:
**AT BE CH DE DK ES FR GR IT LI LU NL PT SE**

(71) Applicant: **VODAFONE LIMITED**
**The Courtyard, 2-4 London Road**
**Newbury, Berkshire RG13 1JL(GB)**

(72) Inventor: **Targett, David John**
**35 Somerton Gardens, Earley**
**Reading, Berkshire RG6 2XG(GB)**

(74) Representative: **Foster, David Martyn et al**
**MATHISEN MACARA & CO. The Coach**
**House 6-8 Swakeleys Road**
**Ickenham Uxbridge UB10 8BZ(GB)**

(54) Communication request retry in cellular telecommunications networks and methods therefor.

(57) A GSM cellular telephone system has cells (macrocells CI and CII). A GSM mobile station (MS) accesses the base station of the nearest cell in order to make communication with another party via a communications channel. During the setting up of such communication, the MS measures the signal strengths of adjacent cells. If there is no communication channel available in the initial cell, the network can thus set up communication via an unoccupied communications channel in one of the adjacent cells, provided the latter's signal strength is sufficiently high. The network is also capable of offering a more restricted service to subscribers to a microcellular system - for example, service in large cities or towns identified at X,Y and Z. A microcellular MS requests service via a microcell in one of these areas and the call is set up via that microcell if it has an available communications channel. The microcellular MS also measures the signal strength of adjacent cells. If there is no available communications channel in the initial microcell, the call is set up via an available communications channel in an adjacent microcell (if the latter's signal strength is great enough), but any attempt to set up the call via an adjacent cell which is not a microcell is blocked.

Fig.2.

EP 0 505 105 A2

The invention relates to cellular telecommunications networks and methods. Embodiments of the invention to be described relate to cellular telephone networks involving mobiles, including hand-held portable telephones, which can communicate with each other and with fixed telephones. However, the invention may be applied to any other type of cellular telecommunications networks.

According to the invention, there is provided a cellular telecommunications network for permitting communication with mobile subscriber equipment of at least two separate subscriber systems, in which the cells of the network are not all permitted for use by the mobile equipment of each of the systems, including means for each cell for receiving a request for communication from or with mobile equipment, measuring means responsive to such a request in respect of a particular cell which is permitted for use by the requesting equipment to carry out respective measurements of the radio signal strengths between the equipment and cells adjacent to the particular cell, means operative when there is an available communication channel within the particular cell to set up the requested communication by means of that channel, and means operative in the event of absence of such an available communication channel to set up the requested communication via an unoccupied one of the communication channels of any of the adjacent cells in respect of which the said radio signal strength exceeds a predetermined minimum and which is also a cell permitted for use by the requesting equipment.

According to the invention, there is further provided a cellular telecommunications network, comprising means defining a plurality of cells each having a predetermined plurality of communication channels by means of a selected one of which a mobile station can communicate by radio with another party, means for each cell for receiving a request for communication from or with a mobile station, measuring means responsive to such a request in respect of a particular cell to measure the radio signal strengths between the mobile station and cells adjacent to the particular cell, and selective means operative in response to absence of an available communication channel in the particular cell to establish communication with the mobile station via an available communication channel in one of the adjacent cells provided that the respective measured radio signal strength relating to that cell exceeds a predetermined minimum.

According to the invention, there is also provided a method of operating a GSM cellular telephone network so as to permit it also to offer service over part, only, of its area to subscribers to a microcellular system, in which a predetermined plurality of communications channels are provided within each cell by means of which a mobile subscriber equipment may communicate with another party via the network, and comprising the steps of responding in each cell to a request for service in that cell from mobile equipment belonging to the microcellular system by (a) denying such service if that cell does not lie in the said part of the area, (b) providing such service if that cell does lie in the said part and a communications channel is available in that cell, and (c) providing the said service to that subscriber equipment via an unoccupied communications channel in an adjacent cell if that adjacent cell lies in the said part of the area and the radio signal strength between that adjacent cell and the mobile equipment exceeds a predetermined minimum.

Cellular telecommunications networks embodying the invention, and methods according to the invention of operating cellular telecommunications networks, will now be described, by way of example only, with reference to the accompanying diagrammatic drawings in which:

Figure 1 shows part of one of the cellular networks;

Figure 2 shows part of another of the cellular networks; and

Figure 3 is a flow chart for explaining the operation of the cellular network of Figure 1.

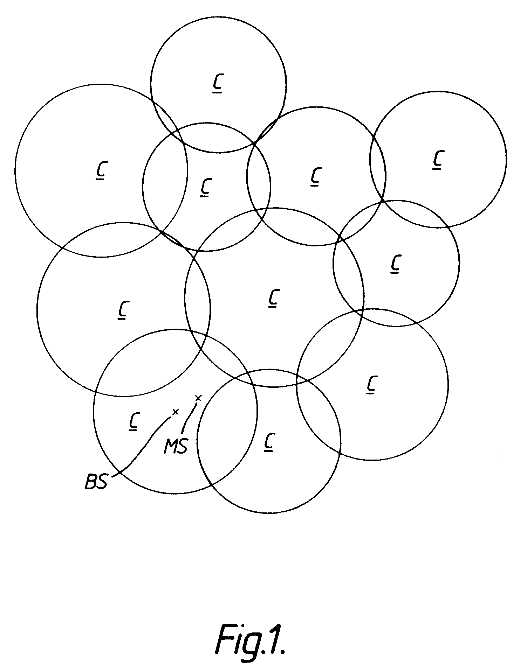

Figure 1 shows cells C of a cellular network. In accordance with normal cellular practice, each cell has a respective base station BS (only one indicated) comprising a radio transmitter/receiver which is controlled by a base station controller. Mobile equipment MS located within a cell of the network can communicate by radio with the base station of that cell and thence to the called party, such further communication being by radio and/or land line. The geographical extent of each cell is dependent on the geographical conditions and the characteristics of the radio transmitter/receiver in each cell and that of the radio transmitter/receiver of the MS. In practice, the cells will be of irregular and varying shape and overlapping as indicated. Within each cell, a predetermined plurality of radio channels is available for use for calls, the cellular arrangement enabling frequencies to be re-used within the network provided that the power and geographical separation between re-used frequencies is such as to prevent interference.

Operation of the network requires, of course, that the location of each MS be known within the network so that, when a call to an MS is to be made via the network, a radio signal can be directed to and received by the MS so that the call can be set up. In one example of a cellular telephone network - the pan-European GSM digital system - the GSM system, groups of cells can be arranged together as respective "location Areas", all the cells within a particular Location Area being arranged to broadcast the same "Location Area Identity" signal or LAI, the LAI for each Location Area differing from the LAI of the other adjacent Location Areas. When an MS enters a cell in a particular Location Area, or when the MS becomes switched on, it receives the LAI of that Location Area from the base station of the cell in which it is located and, in response to this, transmits an identifying signal back to the base station and in this way the network knows the position of the MS (that is, the Location Area in which the MS is located is known though the actual cell is not known). When a call is to be made to that MS, the network knows that it must be made via a cell of the particular Location Area and a connection is established with the MS by means of a broadcast signal sent from all the cells in that particular Location Area. The MS receives the signal and responds to the BS of the nearest cell (that is, the cell from which the strongest signal is received). In this way the particular cell in which the MS is located is identified and the call is set up through that cell's base station. As is well known, the call is "handed over" to the base station of another cell when the MS moves there from the initial cell.

The process of setting up a call will now be described in more detail.

As explained, the cells in a particular Location Area broadcast, on a "broadcast control channel" (BCCH), certain information including the LAI. When a call is to be set up by an MS, it accesses the BS whose radio signal is strongest and is allocated a signalling channel known as a "stand alone dedicated control channel" (SDCCH) with an associated "slow associated control channel" (SACCH). By means of the SDCCH and the SACCH, the call is set up, this process involving such functions as checking the identity and authenticity of the MS and then setting up the path through which the call will be made.

As indicated above, however, each cell has a fixed maximum number of radio channels through which calls can be made. If all such channels for the cell through which the MS makes initial access are occupied, the call clearly cannot be set up through any of them. In a manner now to be explained, however, the network is arranged so that, upon such occurrence, it attempts to set up the call through a radio channel of another cell. It will be appreciated that the areas covered by adjacent cells may often overlap, the extent of such overlap depending on geographical and topographical factors and the powers of the transmitters and receivers.

In accordance with a feature of the network being described, an MS, during the call set-up procedure, transmits to the BS, on the SACCH, the respective signal strengths and cell identities of the BCCH's of adjacent cells. In other words, during the set-up procedure, the MS monitors the BCCH's of all the adjacent cells, assesses the strengths of the radio signals being received, and transmits this information to the BS. If the BS then finds that there are no available radio channels within its own cell on which to set up the call to the MS, it can automatically set up the call through a radio channel of one of the adjacent cells - provided that (a) the signal strength of that adjacent cell with reference to the MS is sufficiently strong (as indicated by the signal strength information previously transmitted to the BS by the MS), and (b) there is a free radio channel in that adjacent cell. This "re-try" process can therefore be set up without the MS having itself to carry out any re-accessing steps; that is, for example, it does not have to establish communication with the BS of an adjacent cell and then go through a setting up process using a different SDCCH and SACCH with that BS - instead, the call can be set up with the adjacent cell directly by the BS of the initial cell.

In addition, the process described enables other factors to be taken into account. For example, there may be several adjacent cells with sufficient strength to enable the call to be set up. In choosing the particular adjacent cell for setting up the call, the BS can therefore choose a particular one of the cells with a relatively large amount of free capacity, in preference to one which is nearly fully occupied.

A cellular network may also be arranged to provide different levels of service to different subscribers. Thus, for example, certain subscribers may be permitted to make calls only within restricted geographical areas, that is, only via cells encompassing such restrictive geographical areas. The "re-try" process described above can therefore also take this into account: that is, if a BS cannot set up a call to an MS through the initial cell, it will not transfer the call to an adjacent cell if that adjacent cell is outside the restricted area applicable to that MS.

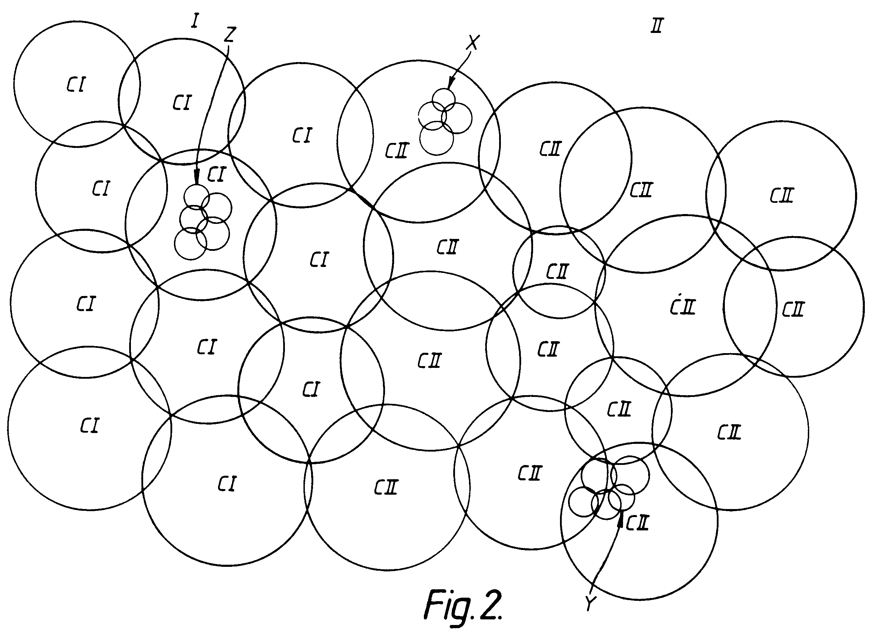

The latter process will now be described in more detail with reference to Figure 2.

In Figure 2, part of a GSM network is illustrated. The network has GSM cells (termed "macrocells") CI and CII, the group of cells CI covering a particular geographical area I corresponding to a first Location Area, and the group of cells CII covering a different, and adjacent, geographical area II - that is, a different Location Area. In practice, the network would also include other groups of macrocells forming further Location Areas, with a single country within the network being covered by a number of different Location Areas each of which would comprise a relatively large number of separate macrocells. Subscribers to the GSM system can communicate with each other and with fixed and other telephones (primarily using mobiles but also including hand-held portables) over a wide geographical area which can in principle encompass the whole of the network. In addition, however, the network provides a more restricted service to subscribers to another system, primarily for personal communication using hand-held portable units and in this specification termed a micro-cellular network (MCN) system. Subscribers to the MCN system are able to use the network only when they are present in a restricted part of the total area covered by the network - though, when they are provided with service, they can communicate with other subscribers to the MCN system as well as with fixed and other telephones (and, including, in principle, subscribers to other cellular systems including the GSM system). For example, whereas GSM subscribers would have service throughout a large area (for example, covering part or substantially all of several European countries), MCN subscribers might be restricted to service within a particular part, only, of a particular one of the countries or one or more cities or towns within one or possibly more than one such country.

Figure 2 shows, by way of example, three particular areas intended to be available to MCN subscribers, these being indicated at X,Y and Z. These areas could, for example, be areas encompassing relatively large cities or towns and are the areas which are intended to be available to the MCN subscribers. Each of the areas X,y and Z is made up of a number of microcells, that is, cells of smaller power and smaller geographical area than the macrocells of the GSM network; in principle, an area X,Y or Z could consist of only a single microcell, though in practice it is likely that it would comprise several such microcells. The microcells forming a particular area (e.g. areas X and Y) could lie wholly within a corresponding macrocell or could fall within two or three macrocells (see area Y).

Co-pending United Kingdom Patent Application No. 9107148.1 discloses how such a network can differentiate between an MS of a GSM subscriber and an MS of an MCN subscriber and can provide the correct level of service to each. In particular, it describes how, in principle, service to an MCN MS will only be provided when the MS is able to set up a call through a microcell within one of the areas X,Y and Z (in this example). Reference is made to that co-pending application for a fuller description.

The foregoing requires that each subscriber's MS issues a signal identifying whether it is a GSM MS or an MCN MS. A convenient method of distinguishing between GSM and MCN MS is by reference to the "Classmark" or RF transmitter power of each MS. GSM MS have a Class number of 1,2,3 or 4 (indicating an RF power varying in the range 20 to 2 watts). MCN subscribers have a Classmark number of 5 (0.8 watts). Each MS equipment issues a signal identifying its Classmark and this enables the network to distinguish between GSM and MCN MS in a simple way.

Considering the network of Figure 2 in more detail, a BS in a particular cell accessed by a GSM MS follows through the process described above in relation to Figure 1 in order to set up a requested call - by setting up the SDCCH and the SACCH. As explained, the GSM MS measures the signal strengths of the signals on the BCCH's of adjacent cells and transmits this information to the BS on the SACCH. If, because there are no free communication channels, the BS cannot set the call up through the initial cell, it therefore carries out the re-try process described with reference to Figure 1 and sets up the call through a channel in an adjacent cell - assuming, of course, that there is such an adjacent channel with sufficient strength and with a free channel.

The same process is, in principle, carried out when an MCN MS attempts to set up a call with the BS of a microcell. Again, the MS measures the signal strength of the signals on the BCCH's of adjacent cells and transmits this information to the MS. If the BS cannot set up the call through the initial cell, because of the absence of a free radio channel, it will then set up the call through an adjacent cell if there is one with sufficient signal strength and also a free channel. However, in this case, the BS will only permit such a re-try process to involve adjacent microcells. In other words, it will not permit the call to be set up through a cell which is not included within the ambit of the subscription paid for by the MCN subscriber.

In principle, the microcells within areas X,Y and Z can be used not only by the MCN subscribers but also by GSM subscribers. The re-try process described above can be used to re-direct calls from GSM subscribers according to the power of their MS. Thus, if a GSM MS of relatively high power (Classmark 1 - 3) is requesting a call but which cannot be set up through the initial cell because of congestion, the BS will normally re-direct the call so that it is established through the adjacent macrocell rather than through any adjacent microcell. This is because the higher power of the MS will enable such an MS to make such a call without having to use a channel in a microcell. However, if the GSM MS is of low power (e.g. a hand-held portable, Classmark 4), the BS may re-direct the call to a microcell.

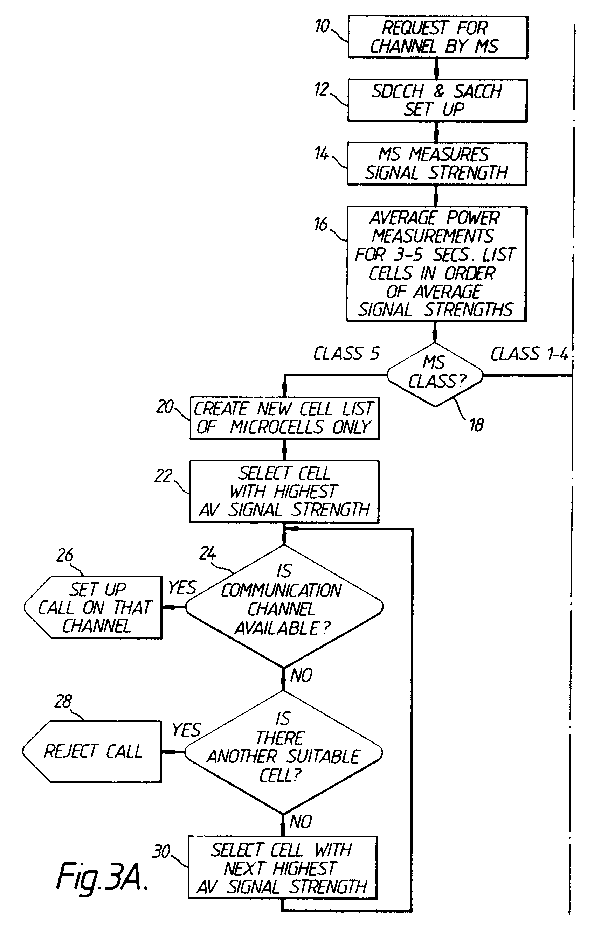

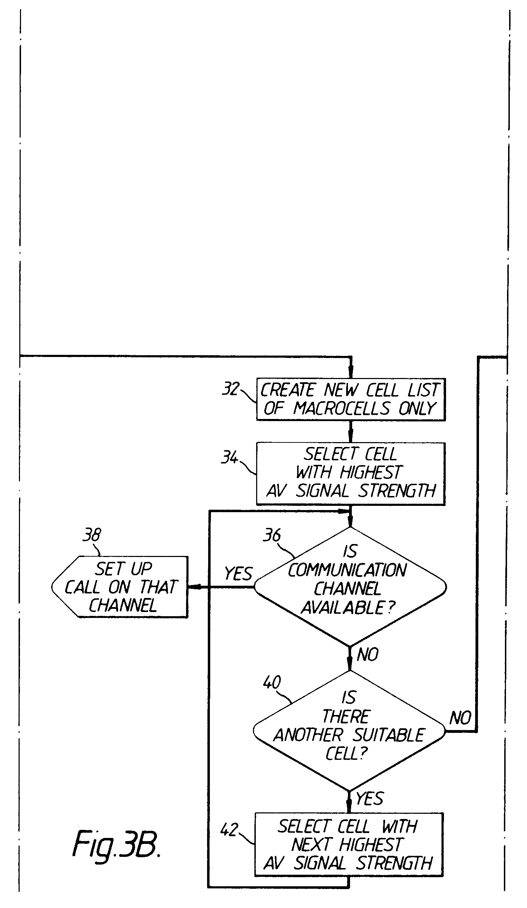

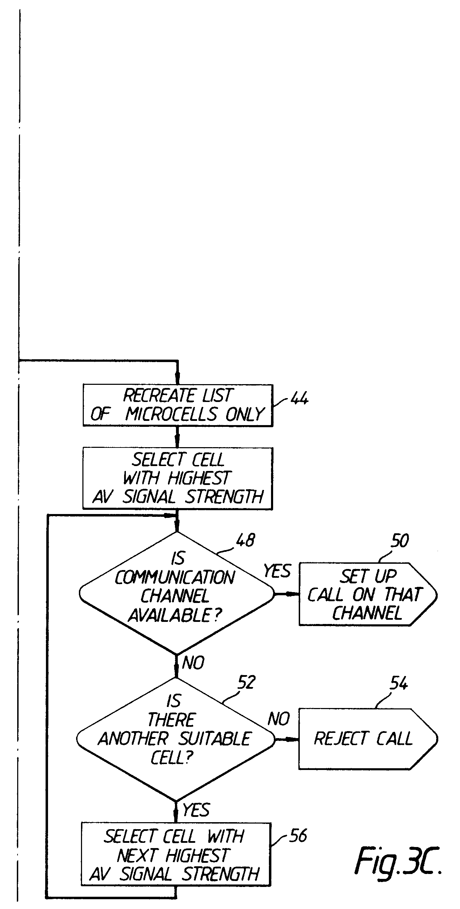

Figure 3 is a flow-chart for illustrating this process.

Block 10 indicates a request by an MS to make a call.

The SDCCH and the accompanying SACCH between the MS and the BS of the accessed cell are therefore set up (block 12). The normal process of setting up the call, including the checking of the identity and authenticity of the MS, now starts. This process includes the measurement by the MS of the signal strengths of the adjacent cells, and these measurements are sent to the BS by the MS (block 14).

The MS continues to send to the BS further checks on the signal strengths for adjacent cells. These are averaged over a period of (say) three to five seconds and normalised in relation to the power of the MS. They are listed in order of average power (block 16).

As already explained, the network determines whether the MS is an MCN MS or a GSM MS on the basis of its transmitter power. The BS therefore checks the power of the MS (block 18) and determines whether it is an MCN MS (Class 5) or a GSM MS (Classes 1 - 4).

If the MS is Class 5 (that is, an MCN MS), then the network assesses the list of the powers of adjacent cells (established at block 16), and creates a new cell list, of microcells only (block 20).

At block 22, the network selects the microcell with the highest signal strength. At block 24, the network checks whether a communication channel is available in this cell. If the answer is "yes", then the communication is set up via that communication channel (block 26). If the answer is "no", the network checks whether there is another suitable cell (Block 26). If the answer is "no", the cell is rejected (Block-28). If the answer is "yes", the cell with the next highest power is selected (Block 30) and the network proceeds again from Block 24.

If, at block 18, it is decided that the MS is a GSM MS (Classes 1 - 4), then the network uses the measurement information established at block 16, and creates a list in signal strength order of macrocells (only) (block 32). The cell with the highest average signal strength is then selected (block 34).

A check is then made (block 36) whether a communication channel is available on this cell. If the answer is "yes", then the communication is established on that channel (block 38). If the answer is "no", then a check is made (block 40) whether there is another available macrocell in the list established at block 32. If the answer is "yes", the cell with the next highest average signal strength is selected (block 42) and the network repeats the procedure from block 36.

However, if the answer is "no", the network establishes a list of adjacent microcells in signal strength order (block 44), again using the information established at block 20.

The microcell with the highest average signal strength is then selected (block 46) and a check is made whether a communication channel is available (block 48). If the answer is "yes", this channel is allocated and communication starts (block 50).

If the answer is "no", the network checks (block 52) whether another suitable microcell is available in the list. If the answer is "no", the call is rejected (block 54).

However, if the answer is "yes", the adjacent microcell with the next highest average signal strength is selected (block 52) and the network goes back to block 48 and checks whether a communication channel is available.

**Claims**

1.  A cellular telecommunications network characterised in that it permits communication with mobile subscriber equipment (MS) of at least two separate subscriber systems (e.g. GSM, MCN), in that the cells (CI,CII,X,Y,Z) of the network are not all permitted for use by the mobile equipment (MS) of each of the systems (GSM,MCN), and by means for each cell (CI,CII,X,Y,Z) for receiving a request for communication from or with mobile equipment (MS), measuring means responsive to such a request in respect of a particular cell (CI,CII,X,Y,Z) which is permitted for use by the requesting equipment to carry out respective measurements of the radio signal strengths between the equipment and cells (CI,CII,X,Y,Z) adjacent to the particular cell (CI,CII,X,Y,Z), means operative when there is an available communication channel within the particular cell (CI,CII,X,Y,Z) to set up the requested communication by means of that channel, and means operative in the event of absence of such an available communication channel to set up the requested communication via an unoccupied one of the communication channels of any of the adjacent cells (CI,CII,X,Y,Z) in respect of which the said radio signal strength exceeds a predetermined minimum and which is also a cell (CI,CII,X,Y,Z) permitted for use by the requesting equipment.

2.  A network according to claim 1, characterised in that one of the systems is a GSM system.

3.  A network according to claims 1 or 2, characterised in that one of the systems is a microcellular system (MCN).

4.  A cellular telecommunications network, comprising means defining a plurality of cells (CI,CII,X,Y,Z) each having a predetermined plurality of communication channels by means of a selected one of which a mobile station (MS) can communicate by radio with another party, and means (BS) for each cell (CI,CII,X,Y,Z) for receiving a request for communication from or with a mobile station (MS), characterised by measuring means responsive to such a request in respect of a particular cell (CI,CII,X,Y,Z) to measure the radio signal strengths between the mobile station (MS) and cells (CI,CII,X,Y,Z) adjacent to the particular cell, and selecting means operative in response to absence of an available communication channel in the particular cell (CI,CII,X,Y,Z) and in dependence on the extent of occupation of the communication channels in the adjacent cells (CI,CII,X,Y,Z) to establish communication with the mobile station (MS) via an available communication channel in one of the adjacent cells (CI,CII,X,Y,Z), provided that the respective measured radio signal strength relating to that cell exceeds a predetermined minimum.

5. A network according to claim 4, characterised by blocking means for preventing the selecting means from selecting particular ones of the adjacent cells (CI,CII,X,Y,Z).

6. A network according to claim 5, characterised in that the blocking means blocks the selection of the said particular ones of the adjacent cells (CI,CII,X,Y,Z) depending on the identity of the mobile station (MS).

7. A network according to any preceding claim, characterised in that the measuring means is located in the mobile equipment or stations (MS).

8. A method of operating a GSM cellular telephone network in which a predetermined plurality of communications channels are provided within each cell (CI,CII,X,Y,Z) by means of which a mobile subscriber equipment (MS) may communicate with another party via the network, characterised in that the network also offers service over part, only, of its area to subscribers to a microcellular system (MCN), and by the steps of responding in each cell (CI,CII,X,Y,Z) to a request for service in that cell (CI,CII,X,Y,Z) from mobile equipment (MS) belonging to the microcellular system (MCN) by (a) denying such service if that cell (CI,CII,X,Y,Z) does not lie in the said part of the area, (b) providing such service via a communications channel in that cell (CI,CII,X,Y,Z) if that cell (CI,CII,X,Y,Z) does lie in the said part and that communications channel is available in that cell (CI,CII,X,Y,Z), and (c) providing such service to that subscriber equipment (MS) via an unoccupied communications channel in an adjacent cell (CI,CII,X,Y,Z) if that adjacent cell lies in the said part of the area and the radio signal strength between that adjacent cell and the mobile equipment (MS) exceeds a predetermined minimum.

9. A method according to claim 8, characterised by the step of causing (a) each GSM subscriber equipment (MS) requesting service from a particular cell (CI,CII), or (b) each microcellular subscriber equipment (MS) requesting service from a particular cell (X,Y,Z) lying in the said part of the area, to measure the signal strengths of the cells adjacent to the particular cell.

Fig.1.

Fig.2.

10 REQUEST FOR CHANNEL BY MS

12 SDCCH & SACCH SET UP

14 MS MEASURES SIGNAL STRENGTH

16 AVERAGE POWER MEASUREMENTS FOR 3-5 SECS. LIST CELLS IN ORDER OF AVERAGE SIGNAL STRENGTHS

CLASS 5 ← 18 MS CLASS? → CLASS 1-4

20 CREATE NEW CELL LIST OF MICROCELLS ONLY

22 SELECT CELL WITH HIGHEST AV SIGNAL STRENGTH

24 IS COMMUNICATION CHANNEL AVAILABLE?

26 SET UP CALL ON THAT CHANNEL ← YES

NO

28 REJECT CALL ← YES

IS THERE ANOTHER SUITABLE CELL?

NO

30 SELECT CELL WITH NEXT HIGHEST AV SIGNAL STRENGTH

Fig.3A.

*32* — CREATE NEW CELL LIST
OF MACROCELLS ONLY

*34* — SELECT CELL
WITH HIGHEST
AV SIGNAL STRENGTH

*38*
SET UP
CALL ON THAT
CHANNEL

YES

*36*
IS
COMMUNICATION
CHANNEL
AVAILABLE?

NO

*40*
IS
THERE
ANOTHER SUITABLE
CELL?

NO

YES

*42* — SELECT CELL WITH
NEXT HIGHEST
AV SIGNAL STRENGTH

*Fig.3B.*

10

RECREATE LIST
OF MICROCELLS ONLY — 44

SELECT CELL
WITH HIGHEST
AV SIGNAL STRENGTH

IS
COMMUNICATION
CHANNEL
AVAILABLE? — 48

YES → SET UP
CALL ON THAT
CHANNEL — 50

NO

IS
THERE
ANOTHER SUITABLE
CELL? — 52

NO → REJECT CALL — 54

YES

SELECT CELL WITH
NEXT HIGHEST
AV SIGNAL STRENGTH — 56

Fig.3C.

11